# EUROPEAN PATENT SPECIFICATION

(11) **EP 2 232 098 B1**
(45) Date of publication and mention of the grant of the patent: **07.03.2012**
(21) Application number: 08855787.1
(22) Date of filing: 05.12.2008
(51) Int. Cl.: F16F 15/315, F16C 15/00, F16F 15/305

(54) **A FLYWHEEL**
SCHWUNGRAD
VOLANT

(30) Priority: 07.12.2007 GB 0723996
(43) Date of publication of application: 29.09.2010
(73) Proprietor: Ricardo Uk Limited, West Sussex BN43 5FG (GB)
(72) Inventor: ATKINS, Andrew, West Sussex BN44 3PG (GB); CHILD, Matthew, West Sussex BN44 3RF (GB)
(74) Representative: Roberts, Gwilym Vaughan
(86) International application number: PCT/GB2008/004050
(87) International publication number: WO 2009/071922

(56) References cited:
- DE-A1- 2 535 790
- DE-A1- 2 622 295
- DE-A1- 2 949 125
- FR-A- 2 574 499

## Description

The invention relates to an apparatus and method for constructing a flywheel for energy storage according to the preamble of claim 1 or 7, respectively (see, for example, FR 2 574 499 A).

### Background of the Invention

Flywheels are known for the storage of energy in the form of kinetic energy, for example for use in vehicles. In such instances it is known to use a flywheel to store the energy which would otherwise be converted to heat in the vehicle's braking system when the vehicle decelerates, this stored energy then being available for use to accelerate the vehicle when desired.

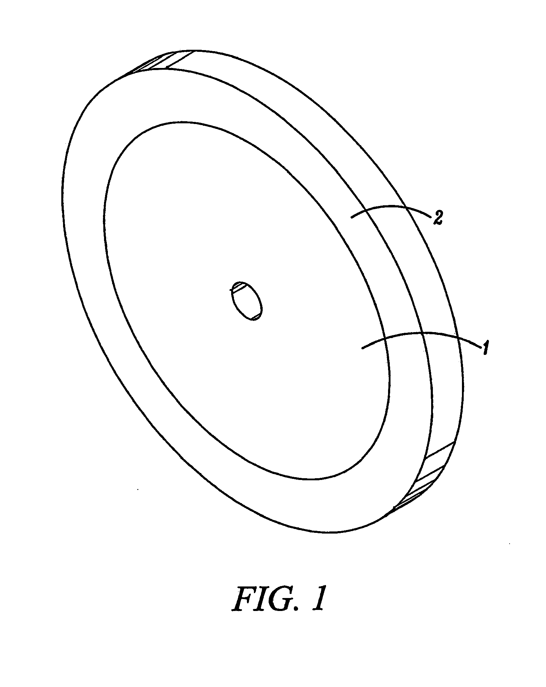

A known type of flywheel according to Figure 1 has a central metallic support section (1) which can be mounted on a central support such as a shaft. At least one composite ring (2) is mounted on the central support section. The composite ring in this type of flywheel is filament wound from carbon fibre. When the flywheel is in rotation, the ring will tend to expand in diameter due to the centrifugal forces acting on it. The ring has high strength in hoop for re-acting the centrifugal forces when the flywheel is in rotation. However, the outer ring can become a loose fit on the central support section and potentially (dangerously) become dismounted from the central support section. In addition the radial stress can result in failure of the composite ring.

In order to counteract the tendency of the ring to grow, the ring is typically machined with a smaller inner diameter than the outer diameter of the central support section and is then mounted onto the central support section with an interference fit. The mismatch in diameters results in a pre-load such that that ring exerts an inward force onto the central support section. This inward preload is greatest when the flywheel is not rotating and results in a requirement for the central support section to be sufficiently structurally strong that it can withstand the preload force when the flywheel is stationary. It is known for more than one composite ring to be pressed together and further mounted onto the central support. The preload increases towards the centre of the flywheel and with the number of rings pressed together. Consequently a large amount of material may be required in the central support section of the flywheel in order to counteract this preload force, and this material, being near the centre of the flywheel, adds only very inefficiently to the rotational inertia of the flywheel.

Yet further, in the known system, exceeding the maximum stress rating of the composite ring will result in failure. In the known flywheel type above, the central support section exerts an outward force on the composite ring due to the preload. This force is in the same direction as the centrifugal forces acting on the ring when the flywheel is in rotation. The ring must therefore be strong enough to counteract the sum of the preload force and the centrifugal forces when the flywheel is rotating at maximum speed. A further problem with this known type of flywheel is therefore that the preload reduces the maximum rotation speed of the flywheel.

A further problem with known systems is that if a flywheel is to be coupled to, for example, a vehicle transmission, a splined coupling is normally required in order that high transient torque levels (for example when the vehicle gearbox ratio is changed quickly, thus requiring the flywheel to accelerate or decelerate rapidly) may be transmitted to the flywheel without slippage.

The above-mentioned FR 2574499 A discloses a flywheel comprising a ring connected by flexible straps to a driving shaft.

Furthermore, DE 2535790 A1 discloses a flywheel having a hub, a rim concentrically extending around the hub, and at least one flange formed from winding at least two cable lengths to join the hub and the rim to form a balance assembly.

Finally, DE 2949125 A1 discloses a flywheel for energy storage, having a rim and a hub joined by spokes.

### Brief description of the invention

The invention is set out in the claims. According to a first aspect of the invention as defined in independent product claim 1, a flywheel is provided with a drive transfer element and a rim comprising a mass element, where the rim and the drive transfer element are coupled by a winding.

According to the first aspect of the invention, the winding supports the rim, which incorporates the mass element, on the drive transfer element, for example a shaft, without the need for a pre-loaded interference fit between the mass element and the drive transfer element. This removes the requirement for a substantial central support to counteract a preload force and thereby reduces the amount of inertially inefficient mass in the flywheel. Yet further, the rim becomes more securely fixed on the drive transfer element as the speed of rotation of the flywheel increases. This advantage results from a tightening of the winding as rotational speed increases and the centrifugal forces acting on the rim cause it to grow in diameter.

Furthermore, there is no requirement for a portion of the tensile strength of the rim to be used to counteract the reaction of a central support section to the preload, as there is no substantial preload between the drive transfer element and the mass element. The flywheel is thereby able to run at a higher rotational speed, store more energy for a given flywheel mass and rotational speed, and thereby deliver a higher energy storage density for a given weight of flywheel.

According to the invention, the flywheel is provided with a rim, the rim having a mass element and a circumferential support element at least partially disposed radially outside the mass element, whereby the circumferential support element comprises the radially outermost part of the winding coupling the rim and drive transfer element.

In this aspect of the invention, as the reinforcing element is radially outside the mass element it is able to support the mass element without the need for a substantial preload as the tendency for the rim to grow in diameter as the rotational speed increases and disengage the support element is reduced. As the flywheel rotational speed increases, the mass element tends to be forced towards the support element by centrifugal forces, thereby increasing the security of the fit between the two elements. Hence the available strength of the materials used to construct the flywheel are used for counteracting centrifugal forces in a more efficient manner allowing higher achievable rotational speeds and thereby a higher realisable energy storage density.

In another embodiment, the mass element is a dense liquid. Mercury is a suitable dense liquid. This gives the advantage that the mass element is self-balancing.

According to the invention, there is provided a flywheel having a drive transfer element, for example a shaft, the drive transfer element being substantially torsionally compliant. A flywheel incorporating this torsionally compliant drive transfer element is coupled with a rim incorporating a mass element by a winding.

The torsional compliance of the drive transfer element in this aspect of the invention provides a cushioning effect allowing it to store energy in a similar manner as a spring stores energy, such that the peak torque levels across a coupling to the drive transfer element are reduced. This allows for means of coupling other than splined couplings to be used. For example, frictional or magnetic couplings, which have a lower peak torque handling capacity than splined couplings may be used.

According to a second aspect, the invention discloses a method of manufacturing or assembling the flywheel, as defined in independent claim 7.

Additional technical features or method steps of the invention are disclosed in the dependent claims.

### Figures

Embodiments of the invention will now be described with reference to the drawings, of which:
Figure 1 is a representation of a known flywheel;
Figure 2 is an isometric view of an embodiment of the present invention;
Figure 3 is a cross-sectional view of the embodiment of Figure 2;
Figure 4 is a view of a shaft construction;
Figure 5 is a detailed view of a winding pattern;
Figure 6 is a view of the winding at a shaft;
Figure 7 is a view showing alternative winding methods at a rim;

### Detailed description

In overview, the apparatus and method described herein relate to a flywheel energy storage device where material used in its construction is deployed in an inertially efficient manner, and where the support structure is under tension, a rim comprising a mass element is held in place on its outer surface by a winding which also passes around a drive transfer element, rather than for example by a compressive interference fit to its inner surface.

According to the invention (as defined in claim 1 or 7) a support element surrounds the rim to counteract centrifugal forces and a torsionally compliant or resilient drive transfer element such as e.g. a shaft is provided.

The winding may be configured in a number of ways as described below and may also be pre-tensioned. The drive transfer element may be a shaft, which may be hollow and may be constructed from wound carbon fibre. The rim comprises a circumferential support member and a mass element mounted radially inwards of the support member.

In embodiments the rim may be constructed of a composite material, for example a wound carbon fibre and resin. The mass element may be a ring, pressed or moulded into the reinforcing element. Alternatively, the mass element may comprise one or more dense elements incorporated into the rim by moulding, drilling, pressing or adhesive attachment to the inside of the reinforcement element.

The drive transfer element may be a hollow shaft for instance, and this may be formed from a wound carbon fibre composite. The composite may be wound with fibres oriented in directions arranged such that both bending of the shaft and twisting of the shaft result in a change in the length of the fibres, these deformations therefore being resisted by the fibre's natural tendency to resist changes in length. The shaft may thereby be formed so that it is compliant to a twisting motion.

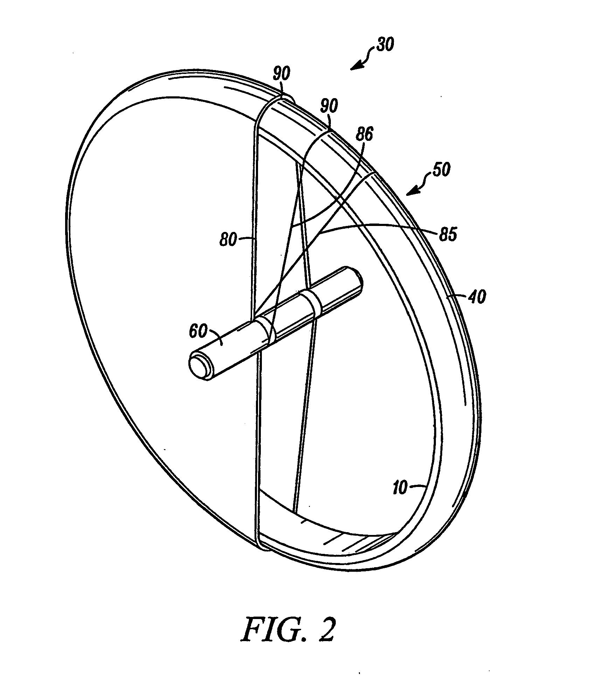

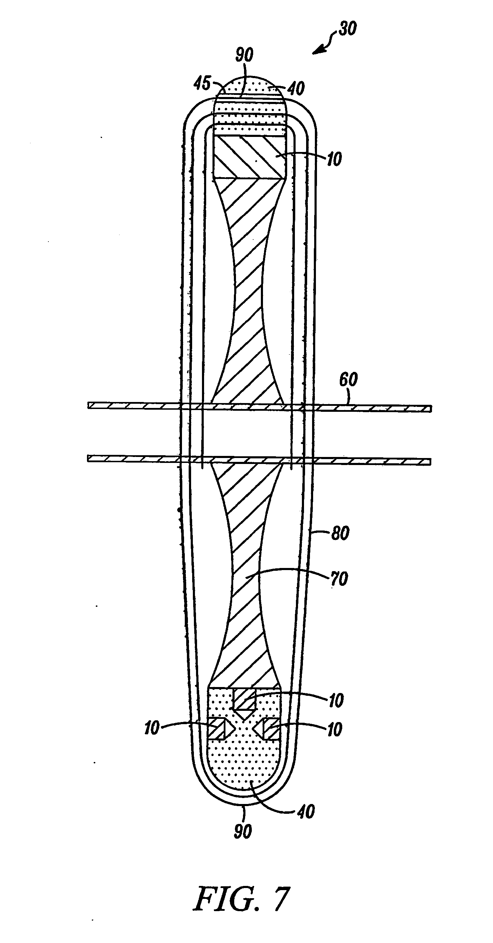

Referring to Figures 2 and 7, in order to effectively provide a high inertia, a rim (50) including a mass element (10) comprising, for example, a ring of relatively massive material is disposed at a relatively large radius, compared with the size of the flywheel (30), from a drive transfer element such as a shaft (60) providing a central rotating axis (20). The mass element (10) has a high density in order to effectively provide inertia. Suitable materials may be lead or steel for example, although other materials could be used. The mass element (10) is subject to stress when the flywheel (30) is in rotation, this being induced by centrifugal forces.

An outer circumferential support element member (40) is located radially outside the mass element. The support member (40) has a high hoop strength and is able to counteract the centrifugal forces acting on the mass element (10) when the flywheel (30) is in rotation. The support member (40) is preferably a carbon fibre composite, wound in a circumferential direction so as to impart a high strength in hoop. In the embodiment shown the support member (40) is pressed onto the mass element (10) with a small interference preload such that the two are effectively joined, forming a rim (50). The preload only needs to be small since it merely functions to hold the two elements together in an interference fit when the flywheel is stationary. Alternatively, the two may be joined by an adhesive bond or similar. The more efficient placement of mass, concentrating mass near the rim of the flywheel results in a lighter flywheel for a given energy storage capacity. Although the mass element is shown in Figure 2 as a continuous ring, alternatively it may be separate ring segments, or may be discrete elements of mass. For example, an alternative arrangement is shown in Figure 7 wherein the mass may be inserted or moulded into the support member (40), either as a ring, or as discrete elements into receiving holes in the support member (40).

Referring to Figures 2, 5 and 6, a winding couples the rim (50) to the shaft (60). The winding is configured such that it consists of substantially or partially radial portions (80) extending from the shaft (60) to the rim (50) and substantially axial portions (90) extending around the rim (50). In the embodiment shown the winding is filament wound in a winding operation proceeding as follows: radial portions from shaft (60) to rim (50), axial portions over the rim (50) so as to form a 'sling', and then radial portions back from rim (50) to shaft (60), in a repeating fashion. The winding (87) may pass at least partially around the circumference of the shaft (60) between some but not necessarily all iterations of the winding operation. The winding (80, 90) will stretch slightly as the rim (50) grows under centrifugal forces and will exert a counteracting force on the rim (50). Thereby, the winding (80, 90) assists the support member (40) of the rim (50) in resisting the centrifugal forces acting on the mass element (10) and in resisting the radial growth of the rim (50). The winding (80, 90) could be made of a fibre, including carbon, glass fibre, Kevlar, Zylon or nylon, or could be made of a metal wire in low stress applications. As a result more massive mounting arrangements such as a central support section or spokes are not required.

In embodiments where the mass element comprises a ductile or malleable material, the support member (10) and the winding (80, 90) can be pre-tensioned during manufacture by the following method: The flywheel is assembled in the way herein previously described, with drive transfer element (60) and rim (50) coupled by a winding, the rim (50) comprising a mass element (10) and an outer support member (40). No or negligible pre-load inwardly need be applied at this stage. The flywheel is then spun at an angular velocity sufficiently high that the centrifugal forces on the mass element (10) are sufficient to cause it to yield and smaller than its ultimate tensile strength. As a result, the mass element (10) yields outwardly and its circumference increases. The increase in circumference of the mass element (10) results in a secure interference fit between mass element (10) and support member (40), thereby stretching and pre-tensioning the support member (40) and also stretching and pre-tensioning the winding (80, 90). The mass element (10) has a low to moderate Young's modulus, which is less than that of the support member (40), such that the mass element's (10) tendency to deform under centrifugal forces is greater than that of the support member (40). This operation results in a pre-tensioning of both the support member (40) and the winding (80, 90). In this way, both the support member (40) and the winding (80, 90) are pre-tensioned, compared to the result of fitting the mass element (10) to the support member (40) with an interference fit before adding the winding, which would result in a pre-loading of the support member (40) only. In other embodiments the above method can be used to pre-tension the support member (40) alone.

In other embodiments, a material with an extremely low Youngs's modulus comprises the mass element (10), such as Mercury. The use of a dense liquid such as Mercury results in a flywheel in which the mass element (10) is self-balancing. The support member (40) constrains the mass element (10) radially inside the support member (40).

Suitably ductile or malleable materials for use in comprising the mass element (10) have a large ultimate tensile strength compared with their first point of yield strength, defining a sufficiently large ductile region that the yield point of the material can be exceeded during the manufacturing operation detailed above without a risk of exceeding the ultimate tensile strength of the material. A suitable ratio of yield strength to ultimate tensile strength would be close to 1:2. The material used for the mass element (10) also has a first point of yield which is sufficiently low that it may be exceeded at moderate flywheel speeds such that failure of other parts of the flywheel is avoided, such parts being for instance the outer support member (40) and winding (80, 90). The material also has properties such that the centrifugal forces resulting in the pre-loading process cause a sufficiently large circumferential deformation of the mass element (10) that the resulting deformation of the support member (40) and winding (80, 90) results in a pre-load which significantly counteracts centrifugal forces acting on the mass element (10) when it is rotating at the typical rotational speeds encountered during normal operation.

In embodiments where the mass element (10) is not ductile and is not pre-loaded using the above method, the ultimate tensile strength of the mass element is optimally close to that of the support member (40) and the yield strength of the mass element (10) is as close as possible to the ultimate tensile strength of the support member (40)..

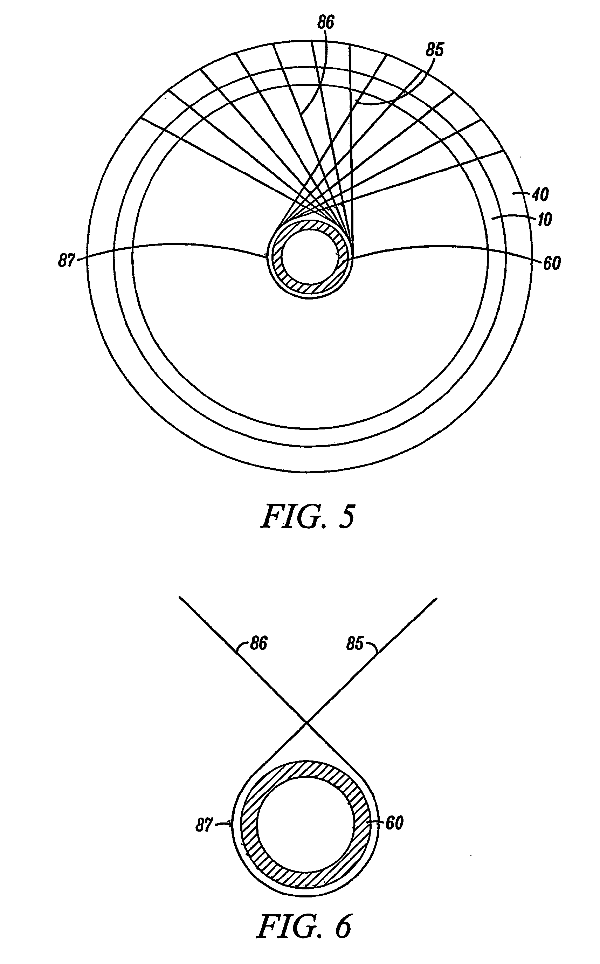

Referring to Figure 5, the angle of the winding portions (80) from shaft (60) to rim (50) may be selected to determine the characteristics of torque transfer between shaft (60) and rim (50). The angle used may be selected between i) a tangent to the shaft circumference and ii) perpendicular to the shaft circumference. A selected angle which is close to a perpendicular angle to the shaft (60) will enhance the contribution made by the winding (80) to the counteraction of centrifugal forces acting on the mass element (40). A selected angle which is close to a tangent to the shaft circumference will enhance the ability of the winding (80) to transfer torque between the rim (50) and the shaft (60). A compromise angle within the range of angles above can be selected in order to optimise the contribution made by the winding. Since the winding (80, 90) is only able to transfer torque when in tension, the radial winding portions (80) can be arranged in both clockwise (85) and anticlockwise (86) directions such that either clockwise (85) or anticlockwise (86) winding portions are in tension, depending on whether the flywheel is accelerating or decelerating. Yet further the axial position along the shaft about which the winding is arranged can be varied to vary the strength of tensile support.

Referring to Figure 2, the number of turns of the winding (80, 90), and as a result its strength, may be varied. Likewise, the number of turns of fibre in the carbon support member (40) may be varied so as to alter its strength. Since the reaction against the centrifugal forces acting on the mass element (10) is a combined reaction from the support member (40) and the winding (80, 90), the relative contribution from each can be varied by altering the number of turns in the winding (80, 90) and the number of turns in the support member (40). In one aspect, the support member (40) can be removed altogether, the centrifugal forces acting on the mass element being counteracted solely by the winding (80, 90). Yet further the winding can extend continuously around the whole circumference or can be interrupted with gaps in the circumferential direction between individual or groups of fibres, providing a "spoke-like" arrangement. For example, in the case where the mass element is a number of discrete elements the winding at the rim (90) can be aligned with the discrete mass elements.

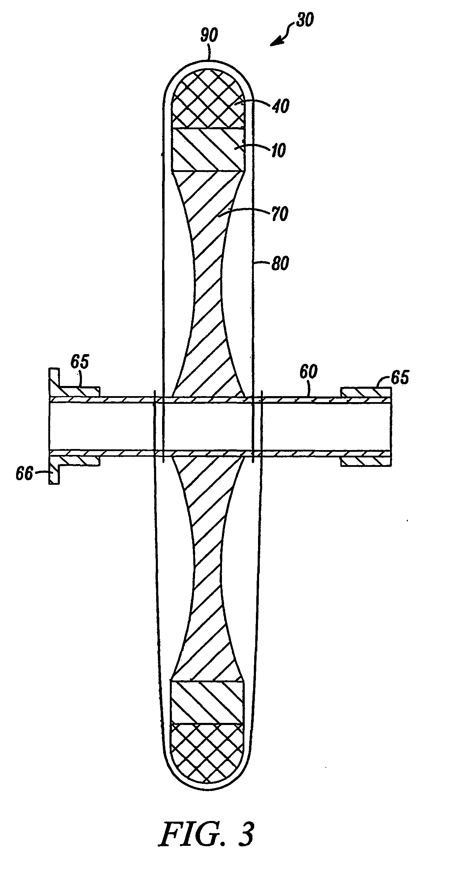

Referring to Figure 3, the rim (50) is temporarily supported by a carrier portion (70) on the drive transfer element, which may be a shaft (60). The carrier portion is preferably made of a lightweight material so as to reduce overall flywheel mass and concentrate mass at the periphery. The carrier portion may for example be made of wood, wax, resin or other lightweight material. The carrier portion allows mounting of the rim on the drive transfer element while the winding is being applied during manufacture. The carrier portion is removed after the winding has been applied to the rim and drive transfer elements, by way of erosion, dissolution, melting or sublimation.

The winding and the carrier portion are relatively light compared with the rim, thereby the flywheel may thus be configured with a rim comprising a mass element such that the majority of the mass of the flywheel is near the rim where it is most inertially efficient. The carrier portion (70) may be glued to the shaft (60) and/or the rim (50).

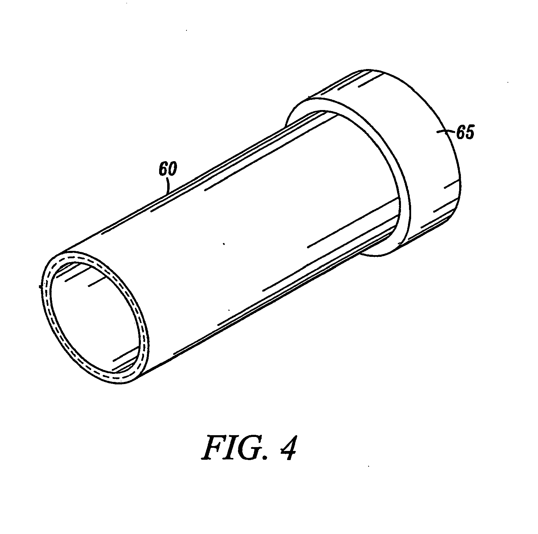

Referring to Figure 4, the shaft (60) may be solid, but is preferably hollow so as to reduce its mass. The shaft (60) is preferably a carbon fibre composite, woven such that it is torsionally compliant and axially stiff. The shaft could however be made of other materials such as glass fibre, steel, titanium, other metals or composites. In the case of a fibre composite shaft, the weave pattern of the fibres may be altered so as to influence the degree of resistance to bending and twisting, and to fine tune the torsional compliance of the shaft. The shaft may have one or more bearing surfaces (65) pressed or glued onto it. One or more bearing surfaces (65) may also incorporate a drive coupling (66), or a separate drive coupling may be glued or pressed onto the shaft. The torsional compliance of the shaft has the effect of limiting peak torque levels at the drive coupling and therefore allows the use of drive couplings with lower peak torque handling capability than that of splined drive couplings, for example frictional or magnetic couplings.

Manufacture of the flywheel can be further understood by referring to Figures 3 and 6. The winding (80, 90) can be formed by a 'wet winding' process whereby a binder is provided for example using a resin or adhesive. The fibre which forms the winding (80, 90) can be impregnated with a resin or adhesive and can be wound while the resin or adhesive was still 'wet', that is to say that the resin or adhesive is in the uncured state. Alternatively, the circumferential support element member (40) can be coated with a resin or adhesive before or during the process of forming the winding (80, 90) such that the winding (80, 90) adheres to the said support member (40). Likewise, the shaft (60) can be coated with a resin or adhesive prior to or during the winding process such that the winding (80, 90) adheres to the shaft (60). These techniques enhance the transfer of torque between shaft (60) and rim (50). Alternatively, an interference fit between winding (80, 90), shaft (60) and rim (50) could be used.

Referring to Figure 7, the winding (80, 90) and the support element (40) have henceforth been described as separate wound elements. However, it would be possible to combine both elements by, for instance, interleaving turns of the winding (80, 90) and turns of the support element (40). It would also be possible to first form the support element (40), form holes (45) through it, and then form the winding (80, 90) with the winding portions (80, 90) passing through the holes (45) in the support element (40). The shape of the support element (40) may be hemispherical or parabolic in order to spread stress in the portion of the winding (90) which contacts the support element (40). Any smooth sectional outline shape is envisaged as being suitable.

Referring to Figures 2 and 5, spaces may be left between the winding portions at the rim (80, 90) such that access to the carrier portion (70) remains. The carrier portion (70) is removed by blasting, erosion, dissolution, melting or sublimation, after the winding (80, 90) has been formed. The carrier portion could for example be made of ceramic, resin, wax or other suitable material to enable this operation. Removing the carrier portion (70) results in an even lighter flywheel having an even lower proportion of inertially inefficient mass. With the carrier portion removed, the winding according to the invention provides the only substantial means of support for the rim on the drive transfer element.

In use the flywheel may be mounted in a vehicle or any other appropriate setting for storage of energy or other purpose such as stabilisation and coupled or decoupled from a drive-providing or receiving component such as a motor, engine or dynamo as appropriate via the drive transfer element.

It will be seen that, as a result of the configuration described above, a stronger more efficient flywheel can be provided.

## Claims

1. A flywheel (30) having a drive transfer element (60) and a rim (50) comprising a mass element (10) and a circumferential support element (40) at least partially disposed radially outside the mass element (10), the drive transfer element (60) being coupled to the rim (50) by a winding (80,90) around each, **characterised in that** the circumferential support element (40) comprises the radially outermost part of the winding (80,90), said winding being arranged as substantially the sole means to counteract centrifugal forces acting on the mass element (10).

2. The flywheel (30) of claim 1 wherein the winding (80,90) is a fibre, and
optionally wherein the fibre is carbon, and/or
optionally wherein the winding (80,90) is impregnated with resin or adhesive, and/or
optionally wherein the winding (80,90) is in tension.

3. The flywheel (30) of any preceding claim wherein the drive transfer element (60) is a shaft, and
optionally wherein the winding (80,90) passes at least partially around the circumference of the shaft (60).

4. The flywheel (30) of any preceding claim wherein the winding (80,90) passes around the exterior of the rim (50), and/or
optionally wherein the winding (80,90) passes through the rim (50).

5. The flywheel (30) of claim 1:
wherein the support element (40) comprises circumferentially wound fibre; and/or
optionally wherein the winding (80,90) incorporates substantially radial portions (80) extending between the drive transfer element (60) and the rim (50), and
optionally wherein the radial portions (80) are wound in clockwise and anticlockwise directions from the normal direction to the circumferential surface of the drive transfer element (60), and/or
optionally in which the winding (80,90) incorporates substantially axial portions (90) extending around or through the rim (50), and
optionally wherein the axial winding portions (90) are spaced substantially equally around the circumference of the rim (50).

6. The flywheel (30) of claim 5 in which the drive transfer element (60) comprises a substantially torsionally compliant drive transfer element (60), and/or:
optionally wherein the rim (50) edge has a hemispherical or parabolic cross-sectional profile; and/or
optionally wherein the mass element (10) is pressed into, moulded into or glued to the support element (40), or is inserted into receiving holes in the support element (40), and/or
optionally in which the mass element (10) is ductile.

7. A method of constructing a flywheel (30) having a drive transfer element (60) and a rim (50) comprising a mass element and a circumferential support element (40) at least partially disposed radially outside the mass element (10), the method comprising providing a winding (80,90) around the rim and drive transfer element, **characterised in that** the circumferential support element (40) comprises the radially outermost part of the winding (80,90), said winding being arranged to provide substantially the sole means to counteract centrifugal forces acting on the mass element, (10).

8. A method as claimed in claim 7 in which the winding (80,90) is provided by winding a fibre in a path, the path being: from the drive transfer element to the rim in a radial direction (80); around the rim in an axial direction (90); and from the rim to the drive transfer element in a radial direction (80), and/or
optionally wherein the winding (80,90) is wound around the drive transfer element (60) in both clockwise and anti-clockwise directions, and/or
optionally wherein the winding (80,90) is impregnated with a binder, and
optionally in which the winding (80,90) is wound when the binder is in an uncured state.

9. The method of any of claims 7 to 8 wherein the rim (50) is supported on the drive transfer element (60) by a carrier (70) while the winding operation is performed, and wherein the carrier portion (70) is removed after the winding operation has been completed, and
wherein the carrier portion (70) is removed by at least one of erosion, dissolution, melting or sublimation.

10. The method of claim 7 wherein the support element (40) is pre-loaded to urge the mass element (10) inwardly, and/or
optionally wherein the mass element (10) is ductile and wherein both the winding (80,90) and the support element (40) are pre-loaded by rotating the flywheel such that centrifugal forces acting on the mass element (10) cause it to yield outwardly, and
optionally wherein the flywheel (30) is rotated at a speed greater than normal operating rotational speeds.

## Patentansprüche

1. Schwungrad (30) mit einem Antriebsübertragungselement (60) und einem Schwungring (50), welcher ein Massenelement (10) und ein umlaufendes Stützelement (40)aufweist, das mindestens teilweise radial außerhalb des Massenelementes (10) angeordnet ist, wobei das Antriebsübertragungselement (60) mit dem Schwungring (50) über eine um beide laufende Wicklung (80, 90) gekoppelt ist, **dadurch gekennzeichnet, dass** das umlaufende Stützelement (40) den radial äußersten Teil der Wicklung (80, 90) aufweist, wobei die Wicklung im Wesentlichen als alleiniges Mittel angeordnet ist, um den auf das Massenelement (10) wirkenden Zentrifugalkräften entgegenzuwirken.

2. Schwungrad (30) nach Anspruch 1, wobei die Wicklung (80, 90) eine Faser ist, und
optional die Faser Kohlenstoff ist, und/oder
optional die Wicklung (80, 90) mit Harz oder einem Haftmittel imprägniert ist, und/oder
optional die Wicklung (80, 90) unter Spannung ist.

3. Schwungrad (30) nach einem der vorangegangenen Ansprüche, wobei das Antriebsübertragungselement (60) eine Welle ist, und
optional die Wicklung (80, 90) mindestens teilweise um die Umlauffläche der Welle (60) läuft.

4. Schwungrad (30) nach einem der vorangegangenen Ansprüche, wobei die Wicklung (80, 90) um die Außenseite des Schwungrings (50) läuft, und/oder
optional die Wicklung (80, 90) durch den Schwungring (50) läuft.

5. Schwungrad (30) nach Anspruch 1,
wobei das Stützelement (40) umlaufend gewickelte Fasern aufweist; und/oder
optional die Wicklung (80, 90) im Wesentlichen radiale Abschnitte (80) enthält, die sich zwischen dem Antriebsübertragungselement (60) und dem Schwungring (50) erstrecken, und
optional die radialen Abschnitte (80) im Uhrzeigersinn und gegen den Uhrzeigersinn aus normaler Richtung zur Umlauffläche des Antriebsübertragungselements (60) hin gewickelt sind, und/oder
optional die Wicklung (80, 90) im Wesentlichen axiale Abschnitte (90) enthält, die sich um oder durch den Schwungring (50) erstrecken, und
optional die axialen Wicklungsabschnitte (90) im Wesentlichen in gleichmäßigen Abständen die Umlauffläche des Schwungrings (50) umlaufen.

6. Schwungrad (30) nach Anspruch 5, bei dem das Antriebsübertragungselement (60) ein im Wesentlichen torsionsnachgiebiges Antriebsübertragungselement (60) aufweist, und/oder
optional die Kante des Schwungrings (50) ein halbkugel- oder parabolförmiges Querschnittsprofil aufweist; und/oder
optional das Massenelement (10) in das Stützelement (40) gedrückt, eingeformt oder daran angeklebt oder in Aufnahmelöcher im Stützelement (40) eingefügt wird, und/oder
optional das Massenelement (10) verformbar ist.

7. Verfahren zum Herstellen eines Schwungrads (30) mit einem Antriebsübertragungselement (60) und einem Schwungring (50), welcher ein Massenelement (10) und ein umlaufendes Stützelement (40) aufweist, das mindestens teilweise radial außerhalb des Massenelementes (10) angeordnet ist, wobei das Verfahren die Bereitstellung einer Wicklung (80, 90) umfasst, die um den Schwungring und das Antriebsübertragungselement führt, **dadurch gekennzeichnet, dass** das umlaufende Stützelement (40) den radial äußersten Teil der Wicklung (80, 90) aufweist, wobei die Wicklung angeordnet ist, um im Wesentlichen das alleinige Mittel bereitzustellen, um den auf das Massenelement (10) wirkenden Zentrifugalkräften entgegenzuwirken.

8. Verfahren nach Anspruch 7, bei welchem die Wicklung (80, 90) bereitgestellt wird, indem eine Faser in einer Bahn gewickelt wird, wobei die Bahn: von dem Antriebsübertragungselement in radialer Richtung (80) zum Schwungring verläuft; in axialer Richtung (90) um den Schwungring verläuft; und von dem Schwungring in radialer Richtung (80) zum Antriebsübertragungselement verläuft, und/oder optional die Wicklung (80, 90) sowohl im Uhrzeigersinn als auch gegen den Uhrzeigersinn um das Antriebsübertragungselement (60) gewickelt ist, und/oder
optional die Wicklung (80, 90) mit einem Bindemittel imprägniert ist, und
optional die Wicklung (80, 90) gewickelt wird, wenn das Bindemittel in einem nicht gehärteten Zustand vorliegt.

9. Verfahren nach einem der Ansprüche 7 bis 8, wobei der Schwungring (50) von einem Träger (70) an dem Antriebsübertragungselement (60) gehalten wird, während der Wicklungsvorgang durchgeführt wird, und
wobei der Trägerabschnitt (70) nach Abschluss des Wicklungsvorgangs entfernt wird, und
wobei der Trägerabschnitt (70) durch mindestens entweder Abtragen, Ablösen, Schmelzen oder Sublimieren entfernt wird.

10. Verfahren nach Anspruch 7, wobei das Stützelement (40) vorgespannt ist, um das Massenelement (10) einwärts zu drängen, und/oder
optional das Massenelement (10) verformbar ist und wobei sowohl die Wicklung (80, 90) als auch das Stützelement (40) vorgespannt werden, indem das Schwungrad so gedreht wird, dass die auf das Massenelement (10) wirkenden Zentrifugalkräfte bewirken, dass es nach außen weicht, und
optional das Schwungrad (30) mit einer Geschwindigkeit gedreht wird, die größer ist als die normalen Arbeitsdrehgeschwindigkeiten.

## Revendications

1. Volant (30) doté d'un élément de transmission d'entraînement (60) et d'une jante (50) comprenant un élément formant masse (10) et un élément de support circonférentiel (40) au moins partiellement disposé à l'extérieur de l'élément formant masse (10), l'élément de transmission d'entraînement (60) étant accouplé à la jante (50) par un enroulement (80, 90) les entourant tous deux, **caractérisé en ce que** l'élément de support circonférentiel (40) comprend la partie de l'enroulement (80, 90) située le plus à l'extérieur dans un sens radial, ledit enroulement constituant sensiblement l'unique moyen de compensation des forces centrifuges agissant sur l'élément formant masse (10).

2. Volant (30) selon la revendication 1, dans lequel l'enroulement (80, 90) est une fibre et,
optionnellement, dans lequel la fibre est du carbone et/ou,
optionnellement, dans lequel l'enroulement (80, 90) est imprégné de résine ou d'adhésif et/ou, optionnellement, dans lequel l'enroulement (80, 90) est tendu.

3. Volant (30) selon l'une quelconque des revendications précédentes, dans lequel l'élément de transmission d'entraînement (60) est un arbre et,
optionnellement, dans lequel l'enroulement (80, 90) passe au moins partiellement autour de la circonférence de l'arbre (60).

4. Volant (30), selon l'une quelconque des revendications précédentes, dans lequel l'enroulement (80, 90) passe autour de l'extérieur de la jante (50) et/ou,
optionnellement, l'enroulement (80, 90) passe à travers la jante (50).

5. Volant (30) selon la revendication 1 :
dans lequel l'élément de support (40) comprend une fibre enroulée dans un sens circonférentiel ; et/ou
optionnellement, dans lequel l'enroulement (80, 90) intègre des parties sensiblement radiales (80) s'étendant entre l'élément de transmission d'entraînement (60) et la jante (50), et
optionnellement, dans lequel les parties radiales (80) sont enroulées dans le sens des aiguilles d'une montre et dans le sens inverse par rapport au sens perpendiculaire, sur la surface circonférentielle de l'élément de transmission d'entrainement (60), et/ou
optionnellement, dans lequel l'enroulement (80, 90) intègre sensiblement des parties axiales (90) qui s'étendent autour ou à travers la jante (50), et
optionnellement, dans lequel les parties axiales (90) de l'enroulement sont espacées de manière sensiblement équidistante sur la circonférence de la jante (50).

6. Volant (30) selon la revendication 5, dans lequel l'élément de transmission d'entraînement (60) comprend un élément de transmission d'entraînement (60) sensiblement flexible en torsion, et/ou :
optionnellement, dans lequel le bord de la jante (50) présente un profil hémisphérique ou parabolique en coupe transversale ; et/ou
optionnellement, dans lequel l'élément formant masse (10) est introduit par pression ou par moulage dans l'élément de support (40), ou bien il est collé à celui-ci, ou encore il est inséré dans des orifices d'accueil ménagés dans l'élément de support (40), et/ou
optionnellement, dans lequel l'élément formant masse (10) est ductile.

7. Procédé de construction d'un volant (30) doté d'un élément de transmission d'entraînement (60) et d'une jante (50) comprenant un élément formant masse et un élément de support circonférentiel (40) au moins partiellement disposé à l'extérieur de l'élément formant masse (10), ledit procédé comprenant l'étape consistant à former un enroulement (80, 90) autour de la jante et de l'élément de transmission d'entraînement, **caractérisé en ce que** l'élément de support circonférentiel (40) comprend la partie de l'enroulement (80, 90) située le plus à l'extérieur dans un sens radial, ledit enroulement constituant sensiblement l'unique moyen de compensation des forces centrifuges agissant sur l'élément formant masse (10).

8. Procédé selon la revendication 7, dans lequel l'enroulement (80, 90) est formé par enroulement d'une fibre selon un motif, à savoir : de l'élément de transmission d'entraînement à la jante dans un sens radial (80) ; autour de la jante dans un sens axial (90) ; et de la jante à l'élément de transmission d'entraînement dans un sens radial (80), et/ou
optionnellement, dans lequel l'enroulement (80, 90) est enroulé autour de l'élément de transmission d'entraînement (60) dans le sens des aiguilles d'une montre tout comme dans le sens inverse, et/ou
optionnellement, dans lequel l'enroulement (80, 90) est imprégné d'un liant, et
optionnellement, dans lequel l'enroulement (80, 90) est enroulé quand le liant est à l'état non durci.

9. Procédé selon l'une quelconque des revendications 7 à 8, dans lequel, pendant l'exécution de l'opération d'enroulage, la jante (50) est supportée sur l'élément de transmission d'entraînement (60) par un support (70), et dans lequel la partie de support (70) est éliminée après l'exécution de l'opération d'enroulage, et dans lequel la partie de support (70) est éliminée au moins par érosion et/ou dissolution et/ou fusion et/ou sublimation.

10. Procédé selon la revendication 7, dans lequel l'élément de support (40) est préchargé pour solliciter l'élément formant masse (10) vers l'intérieur, et/ou
optionnellement, dans lequel l'élément formant masse (10) est ductile et dans lequel l'enroulement (80, 90) tout comme l'élément de support (40) sont préchargés par rotation du volant, de telle sortie que les forces centrifuges agissant sur l'élément formant masse (10) l'entraînent à céder vers l'extérieur, et
optionnellement, dans lequel le volant (30) est entrainé en rotation à une vitesse supérieure aux vitesses de rotation de régime normal.
